# EUROPÄISCHE PATENTSCHRIFT

(11) **EP 4 600 061 B1**
(45) Veröffentlichungstag und Bekanntmachung des Hinweises auf die Patenterteilung: **28.10.2026**
(21) Anmeldenummer: 24156895.5
(22) Anmeldetag: 09.02.2024
(51) Int. Cl.: B60K 1/00, B60K 11/02, B60L 1/00

(54) **ANTRIEBSSYSTEM FÜR EINEN FELDHÄCKSLER**
DRIVE SYSTEM FOR A FORAGE HARVESTER
SYSTÈME D'ENTRAÎNEMENT POUR UNE RAMASSEUSE-HACHEUSE

(43) Veröffentlichungstag der Anmeldung: 13.08.2025
(73) Patentinhaber: Deere & Company, Moline, IL 61265 (US)
(72) Erfinder: KLEIN, Andre, 68163 Mannheim (DE); BOHRER, Stefan, 68163 Mannheim (DE); DANNER, Michael, 68163 Mannheim (DE); KREMER, Dennis, 68163 Mannheim (DE); KORMANN, Georg A, 68163 Mannheim (DE)
(74) Vertreter: Holst, Sönke

(56) Entgegenhaltungen:
- EP-A1- 4 292 851
- DE-A1- 102018 211 863
- US-A1- 2022 234 422
- US-A1- 2022 390 323

## Beschreibung

Die Erfindung betrifft ein Antriebssystem für eine selbstfahrende landwierhscafliche Arbeitsmaschine.

### Stand der Technik

Selbstfahrende landwirtschaftliche Arbeitsmaschinen werden in zunehmendem Maße mit Elektromotoren ausgestattet, deren Energieversorgung ganz oder teilweise durch Stromspeicher (Batterien) erfolgt. Derartige Arbeitsmaschinen können als Ackerschlepper oder als selbstfahrende Erntemaschinen ausgeführt sein. Der elektrische Antriebsstrang weist einen höheren Wirkungsgrad als ein hydraulischer Antriebsstrang auf (M. Gallmeier: "Elektrische Baugruppenantriebe - eine Alternative zur Hydraulik?", Landtechnik 2007, S. 266-267 sowie DE 20 2011 002 195 U1) und beinhaltet üblicherweise Gleichspannungswandler und Wechselrichter zum drehzahlvariablen Antrieb von Elektromotoren, vgl. DE 10 2018 211 863 A1. Zudem kann der durch den Hauptantriebsstrang angetriebene Generator eine Batterie speisen, die in Lastspitzen dazu dient, den dann als Motor dienenden Generator mit Strom zu versorgen (EP 1 563 724 A1), bzw. es kann eine Batterie einen elektromotorischen Antrieb eines angetriebenen Elements einer Erntemaschine im Bedarfsfall, zusätzlich zu einem motorisch angetriebenen Generator, unterstützen oder allein versorgen (EP 2 253 196 A1).

Um elektrische Energie in hinreichend großen Mengen zu speichern, sind entsprechend große Stromspeicher vonnöten. Analog sind auch die Motoren und Generatoren hinreichend groß zu gestalten. Das hat zur Folge, dass eine Luftkühlung nicht mehr ausreicht, den Stromspeicher und die Motoren und Generatoren zu kühlen. Es werden vielmehr Zwangskühlungen benötigt, um die Kühlung dieser relativ großen Bauelemente zu bewerkstelligen. Elektromotoren und Generatoren lassen sich im Allgemeinen durch Öl kühlen, während elektronische Bauelemente, wie Wechselrichter und Gleichspannungswandler, durch Wasser gekühlt werden, dem üblicherweise ein Frostschutzmittel zugesetzt wird.

Es bleibt das Problem, den Stromspeicher zu kühlen. Hierzu sind flüssigkeitsgekühlte Anordnungen beschrieben worden, s. WO 2017/067923 A1. Jedoch sind die Arbeitstemperaturen üblicher Stromspeicher, die in der Regel unter 40 °C liegen sollten, bei gebräuchlichen Kühlsystemen in landwirtschaftlichen Arbeitsmaschinen eher nicht zu erreichen.

Die EP 4 292 851 A1 beschreibt ein Fahrzeug mit einer Brennstoffzelle, einer Batterie und elektrischen Antrieben. Es liegen mehrere Kühlkreise vor, nämlich je einer für die Batterie, für die Brennstoffzelle und für den elektrischen Antrieb. Ein weiterer, mit einem Kühler gekoppelter Kühlkreis ist durch getrennte Wärmetauscher mit dem Kühlkreis des elektrischen Antriebs und dem Kühlkreis der Brennstoffzelle verbunden. Letzterer ist über einen weiteren Wärmetauscher mit dem Kühlkreis der Batterie verbunden. Ein fünfter Kühlkreis ist über weitere Wärmetauscher mit dem Kühlkreis der Brennstoffzelle, dem Kühlkreis der Batterie und dem weiteren Kühlkreis verbunden und dient im Falle eines Hochlastbetriebs u.a. Wärme aus dem Kühlkreis der Batterie abzuführen. Die insgesamt fünf Kühlkreise machen die Anordnung sehr aufwändig.

Die US 2022/0390323 A1 zeigt eine weitere Kühlanordnung für ein Fahrzeug. Die Wärmeabfuhr des Wechselrichters und des Gleichspannungswandlers erfolgt über einen Radiator, während die Wärme der Batterie über einen zweiten und einen dritten Kühlkreislauf abgeführt wird.

### Aufgabe

Die der Erfindung zu Grunde liegende Aufgabe wird darin gesehen, zumindest einige der erwähnten Nachteile zu vermeiden.

### Lösung

Die vorliegende Erfindung wird durch die Patentansprüche definiert.

Mit anderen Worten wird vorgeschlagen, den Gleichspannungswandler und den Wechselrichter durch einen dritten Kühlkreis zu kühlen, der auch einen zweiten Kühlkreis kühlt, welcher seinerseits einen ersten Kühlkreis des Stromspeichers kühlt. Diese dreistufige Kühlung des ersten Kühlkreises hat den Vorteil, dass mit geringem zusätzlichen Aufwand, nämlich für den ersten und zweiten Kühlkreis, eine Wärmeabfuhr aus dem Stromspeicher möglich ist. Durch den zweiten Kühlkreis kann, mit brauchbarem Wirkungsgrad, ein hinreichend großer Temperaturgradient zwischen den dritten und ersten Kühlkreis erzielt werden, der einerseits für den Stromspeicher brauchbare Temperaturen sicherstellt, andererseits die Verwendung für landwirtschaftliche Maschinen üblicher Kühlkreise für elektronische Bauelemente erlaubt.

### Ausführungsbeispiel

Anhand der Abbildungen wird ein Ausführungsbeispiel der Erfindung erläutert. Es zeigen:
- Fig. 1: eine schematische seitliche Ansicht eines selbstfahrenden Feldhäckslers,
- Fig. 2: eine schematische Draufsicht auf das Antriebssystem des Feldhäckslers,
- Fig. 3: eine schematische Darstellung der Kühlung der Elektromotoren und Motoren/Generatoren für den Antrieb der Vorpresswalzen und des Erntevorsatzes, und
- Fig. 4: eine schematische Darstellung der Kühlung der Batterie.

### Feldhäcksler

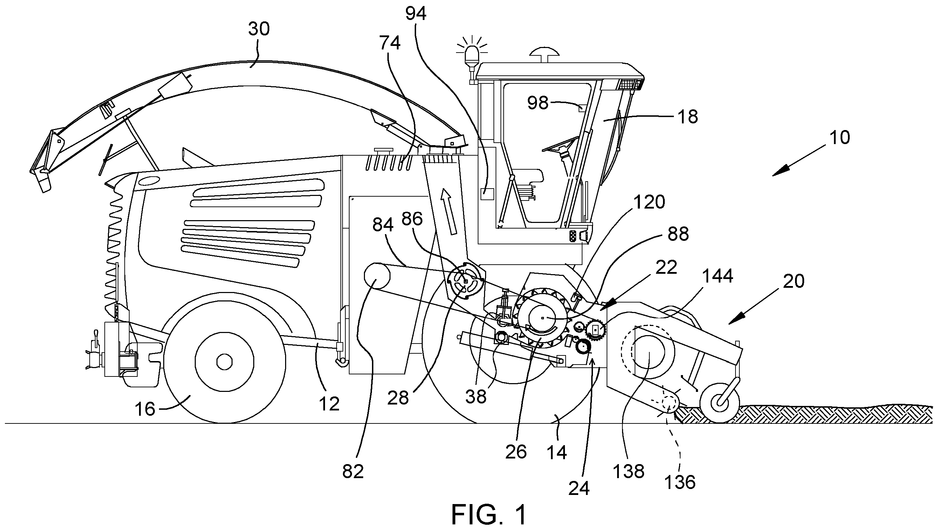

In der Figur 1 ist ein selbstfahrender Feldhäcksler 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen, wird über einen Einzugsförderer mit Vorpresswalzen 22, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es in kleine Stücke häckselt und es einer Nachbearbeitungseinrichtung mit zwei Körnerprozessorwalzen 38 (die bei der Grasernte ausgebaut oder in eine beabstandete Stellung gebracht werden können) und einer stromab folgenden Fördervorrichtung 28 aufgibt. Das Gut verlässt den Feldhäcksler 10 zu einem nebenher fahrenden Transportfahrzeug über einen durch Aktoren um eine etwa vertikale Achse drehbaren und in der Neigung verstellbaren Auswurfkrümmer 30 mit aktorisch verstellbarer Auswurfklappe. Im Folgenden beziehen sich Richtungsangaben, wie seitlich, unten und oben, auf die Vorwärtsbewegungsrichtung V des Feldhäckslers 10, die in der Figur 1 nach rechts verläuft.

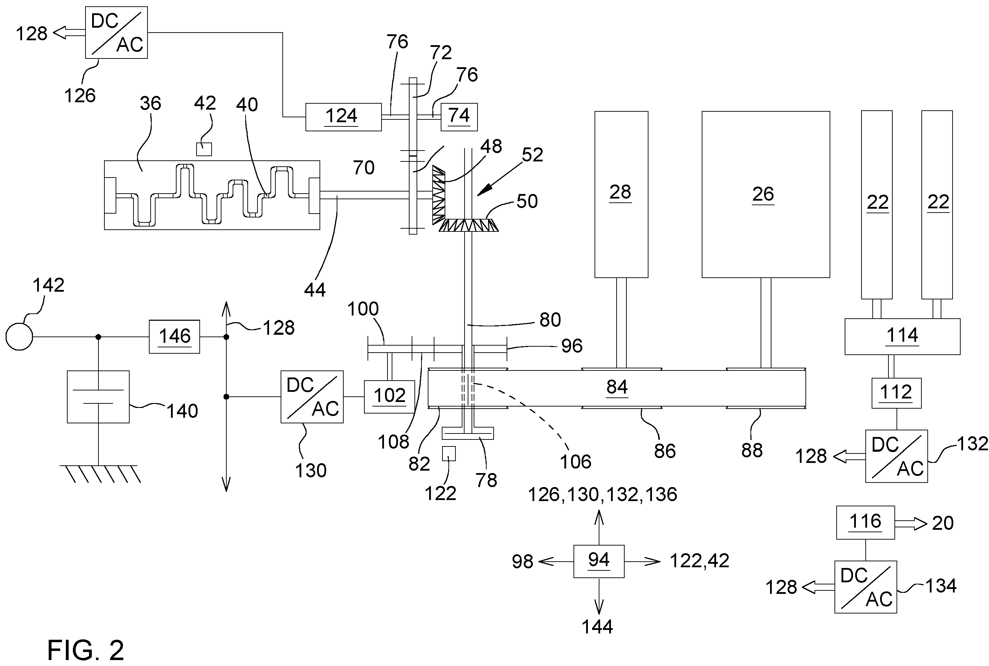

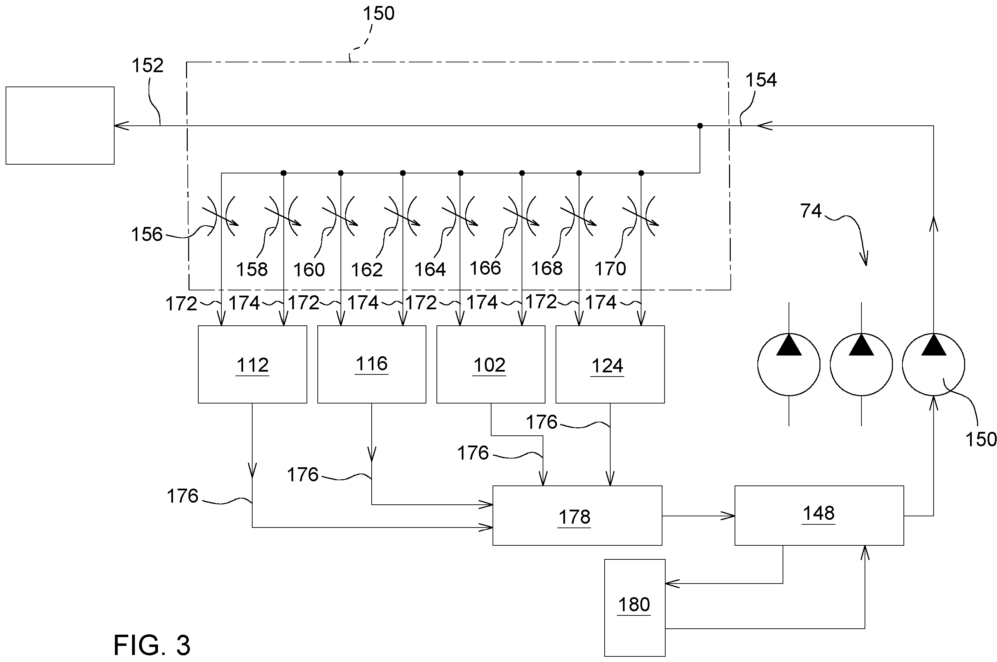

Die Figur 2 zeigt eine Draufsicht auf die Antriebsanordnung des Feldhäckslers 10. Im rückwärtigen Bereich des Feldhäckslers 10 befindet sich ein Verbrennungsmotor 36 insbesondere in Form eines Dieselmotors. Die Kurbelwelle 40 des Verbrennungsmotors 36 erstreckt sich in der Vorwärtsrichtung des Feldhäckslers 10. Der Verbrennungsmotor 36 treibt im Betrieb mit seiner Kurbelwelle 40 eine Längswelle 44 an, die mit dem ersten Kegelzahnrad 48 eines Winkelgetriebes 52 verbunden ist. Die Längswelle 44 treibt auch über Zahnräder 70, 72 und eine zweite Längswelle 76 ein Pumpenaggregat 74 an, das eine Hydropumpe zum Antrieb von Hydromotoren für den Vortrieb der Erntemaschine, eine Lenkpumpe, eine Pumpe 148 (s. auch Fig. 3) zur Versorgung der Aktoren zur Verstellung des Auswurfkrümmers und eine Hydropumpe zur Ölversorgung der Steuereinrichtung des hydrostatischen Antriebs für den Vortrieb der Erntemaschine 10 umfasst. Es wäre auch denkbar, über eines der Zahnräder 70, 72 oder ein dazwischen angeordnetes Zahnrad (nicht gezeigt) weitere permanent angetriebene Elemente, wie einen elektrischen Generator zur Versorgung des Bordnetzes des Feldhäckslers 10 und/oder einen Gebläseantrieb für die Kühlluftzufuhr für den Verbrennungsmotor 36 anzutreiben. Die Längswelle 76 steht zudem in Antriebsverbindung mit einem ersten Motor/Generator 124. Hierbei kann es sich um einen üblichen Drehstrommotor mit inneren Permanentmagneten handeln. Der erste Motor/Generator 124 ist elektrisch mit einem ersten Wechselrichter 126 verbunden, der seinerseits mit einem Gleichstrombus 128 verbunden ist.

Das zweite Kegelzahnrad 50 des Winkelgetriebes 52 ist mit einer Querwelle 80 verbunden, die sich durch eine mit der Riemenscheibe 82 verbundene Hohlwelle 106 hindurch auf die von dem Winkelgetriebe 52 abgewandte Seite der Riemenscheibe 82 erstreckt und dort mit einer Kupplung 78 verbunden ist. Die Kupplung 78 ist ausgangsseitig mit der Hohlwelle 106 verbunden, die außerdem auf der dem Winkelgetriebe 52 zugewandten Seite der Riemenscheibe 82 über Zahnräder 96, 108 und 100 einen zweiten Motor/Generator 102 antreibt. Die Kupplung 78 ermöglicht es, den Treibriemen 84 und mit ihm die Häckseltrommel 26 und die Fördervorrichtung 28 ein- und auszuschalten. Die Kupplung wird mittels eines Aktors 122 geöffnet und getrennt. Der zweite Motor/Generator 102 ist, analog dem ersten Motor/Generator 124 als Drehstromgenerator ausgeführt und mit einem zweiten Wechselrichter 130 verbunden. Der Wechselrichter 130 ist seinerseits mit dem Gleichstrombus 128 verbunden.

Weiterhin ist der Gleichstrombus 128 mit weiteren Wechselrichtern 132, 134 verbunden, von denen der Wechselrichter 134 mit einem ersten Elektromotor 112 verbunden ist, der über ein Getriebe 114 die Vorpresswalzen 22 des Einzugsförderers antreibt, und der Wechselrichter 136 mit einem zweiten (an Bord des Feldhäckslers 10 oder auf dem Erntevorsatz 20 angeordneten) Elektromotor 116 verbunden ist, der einige, mehrere oder alle angetriebenen Elemente des Erntevorsatzes 20 antreibt. Im Falle des der Figur 1 gezeigten Aufnehmers als Erntevorsatz 20 kann der Elektromotor 116 beispielsweise die Zinkenwalze 134 antreiben, während die Querförderschnecke 138 antriebsmäßig mit den Vorpresswalzen 22 des Einzugsförderers gekoppelt sein kann, oder durch einen weiteren Elektromotor (nicht gezeigt) angetrieben wird.

Eine elektronische Steuereinrichtung 94 ist signalübertragend mit einer Bedienerschnittstelle 98, den Wechselrichtern 126, 130, 132, 134 und einem Aktor 122 der Kupplung sowie einer Motorsteuereinrichtung 42 des Verbrennungsmotors 36 verbunden. Der Gleichstrombus 128 ist über einen ein- oder ausgangsseitig durch ein Relais vom Gleichstrombus 128 abtrennbaren Gleichspannungswandler 146 mit einem wiederaufladbaren Stromspeicher 140 (auch als Batterie oder Akkumulator bezeichnet) verbunden, der zudem mittels einer Ladeeinrichtung 142 und einer Ladesteckdose mit einer externen Ladestation verbunden werden kann.

### Funktionsweise

Die Funktionsweise der Steuereinrichtung 94 und der Wechselrichter 126, 130, 132, 134 ist derart, dass die Steuereinrichtung 94 die bidirektionalen Wechselrichter 126 und 130 anweist, den ersten und zweiten Motor/Generator 124, 102 als Elektromotor bzw. Generator zu betreiben und das jeweilige Drehmoment und/oder die Drehzahl an der Welle des Motors/Generators 124, 102 und die Phasenlage des aufgenommenen oder abgegebenen Stroms definiert. Analog kommandiert die Steuereinrichtung 94 die ebenfalls bidirektionalen Wechselrichter 132, 134 die Elektromotoren 112, 116 als Elektromotor bzw. Generator zu betreiben und definiert das jeweilige Drehmoment und/oder die Drehzahl an der Welle des Elektromotors 112, 116 und die Phasenlage des aufgenommenen oder abgegebenen Stroms. Mit anderen Worten können die Motoren/Generatoren 124, 102 durch die Steuereinrichtung 94 als Generator geschaltet werden, um den Stromspeicher 140 aufzuladen und die Elektromotoren 112, 116 zu versorgen oder die Häckseltrommel 26 abzubremsen, oder sie können als Motor geschaltet werden, um die Häckseltrommel 26 anzutreiben (zum Schleifen) oder zu beschleunigen (beim Hochfahren) oder den Verbrennungsmotor 36 als Bremse zu benutzen, um die Häckseltrommel 26 abzubremsen. Analog können die Elektromotoren 112, 116 entsprechend der Anweisungen von der Steuereinrichtung 94 die Vorpresswalzen 22 und die antreibbaren Elemente des Erntevorsatz 20 im elektromotorischen Betrieb antreiben und im generatorischen Betrieb abbremsen. Die Stromflüsse laufen jeweils über den Gleichstrombus 128.

Die in den Figuren 1 und 2 dargestellte Antriebsanordnung ist demnach konfiguriert, unter Kontrolle durch die Steuereinrichtung 94 zumindest in folgenden Betriebsarten zu arbeiten:
(a) Hochfahren der Drehzahl der Häckseltrommel 26. Um einen Erntebetrieb aufzunehmen, ist zunächst der Verbrennungsmotor 36 in Betrieb zu setzen, was ein Bediener an seinem Arbeitsplatz in der Kabine 18 mittels eines Zündschlüssels oder in anderer Weise (z.B. über die Bedienerschnittstelle 98) veranlassen kann. Die Kupplung 78 ist zunächst noch geöffnet, d.h. die Häckseltrommel 26 steht. Über die Bedienerschnittstelle 98 kann der Bediener den Erntebetrieb verlassen. Um die Kupplung 78 zu schonen, veranlasst die Steuereinrichtung 94 die Wechselrichter 126, den ersten Motor/Generator 124 als Generator zu betreiben, um den Gleichspannungsbus 128 mit elektrischer Leistung zu versorgen. Die Steuereinrichtung 94 kommandiert gleichzeitig den Wechselrichter 130, den zweiten Motor/Generator 102 als Elektromotor zu betreiben, sodass er die Häckseltrommel 26 beschleunigt. Wenn etwa gleiche Drehzahlen an Ein- und Ausgang der Kupplung 78 vorliegen (die Steuereinrichtung 94 ist zur Drehzahlerfassung mit entsprechenden Sensoren im ersten, vor der Kupplung 78 liegenden Abschnitt des Antriebsstrangs der Häckseltrommel 26 und im zweiten, hinter der Kupplung 78 liegenden Abschnitt des Antriebsstrangs der Häckseltrommel 26 verbunden bzw. kann diese Drehzahlen aus Signalen ableiten, die von den Motor/Generatoren 124, 102 direkt oder von den Wechselrichtern 126, 130 anhand der durch den Motor/Generator 124, 102 fließenden Ströme bereitgestellt werden), wird die Kupplung 78 geschlossen und der zweite Motor/Generator 102 kann kommandiert werden, den zweiten Abschnitt des Antriebsstrangs der Häckseltrommel 26 nicht mehr zu beschleunigen. Durch diese Vorgehensweise wird die Kupplung 78 relativ wenig belastet und hat eine längere Lebensdauer, als wenn sie bei stehender Häckseltrommel 26 geschlossen würde.
(b) Erntebetrieb. Im normalen Erntebetrieb treibt der Verbrennungsmotor 36 über beide Abschnitte des Antriebsstrangs, die durch die Kupplung 78 verbunden sind, die Häckseltrommel 26 und die Fördervorrichtung 28 an. Der erste Motor/Generator 124 dient als Generator und liefert elektrische Energie an den Gleichstrombus 128, die wiederum zur Versorgung der Elektromotore 112, 116 dient, welche die Vorpresswalzen 22 und antreibbare Elemente des Erntevorsatzes 20 antreiben. Die Elektromotore 112, 116 werden auf eine entsprechende Bedienereingabe mittels der Bedienerschnittstelle 98 aktiviert. Der zweite Motor/Generator 102 kann im Erntebetrieb ebenfalls generatorisch betrieben werden und den Gleichstrombus 128 versorgen, oder er läuft frei mit, ohne Energieabgabe oder -abnahme. Weiterhin kann der Stromspeicher 140 je nach Bedarf, vgl. dazu die Ausführungen weiter unten, zusätzliche Energie liefern, sei es für die Elektromotore 112, 116 oder in Sonderfällen bei hoher Belastung der Häckseltrommel 26 und/oder der Fördervorrichtung 28, für den ersten und/oder zweiten Motor/Generator 124, 102. Es bietet sich an, den ersten Motor/Generator 124 bevorzugt gegenüber dem zweiten Motor/Generator 102 zur Umwandlung der vom Verbrennungsmotor 36 bereitgestellten mechanischen Energie in elektrische Energie zu verwenden, da hierbei die Kupplung 78 nicht belastet wird, während für Betriebsbedingungen, unter denen die Häckseltrommel 26 und/oder die Fördervorrichtung 28 mit mechanischer Energie zu beaufschlagen sind, der zweite Motor/Generator 102 verwendet wird.
   Die Drehzahl des Elektromotors 112 bestimmt, gemeinsam mit der Drehzahl der Häckseltrommel 26, die Schnittlänge des Ernteguts. Diese kann durch den Bediener mittels der Bedienerschnittstelle 98 vorgegeben werden oder Sensoren erfassen Ernteguteigenschaften und legen die Schnittlänge und somit die Drehzahl des Elektromotors 112 fest, die durch die Steuereinrichtung 94 und den Wechselrichter 132 kontrolliert wird. Die Drehzahl des Elektromotors 116 kann fest vorgegeben sein oder von der Schnittlänge und/oder der Vortriebsgeschwindigkeit des Feldhäckslers 10 abhängen, vgl. EP 1 609 351 A1.
(c) Nach dem Erntebetrieb bzw. bei Unterbrechungen ist es sinnvoll, die Häckseltrommel 26 anzuhalten, einerseits zur Vermeidung von Unfallgefahren, andererseits zur Geräuschverminderung. Hierzu wird auf eine entsprechende Eingabe des Bedieners in die Bedienerschnittstelle 98 hin oder anderweitiger sensorischer Erkennung einer Nicht-Erntesituation, z.B. wenn der Bediener seinen Sitzplatz verlässt, nach Öffnung der Kupplung 78 der zweite Motor/Generator 102 als Generator betrieben und wandelt die Rotationsenergie der Häckseltrommel 26 und der Fördervorrichtung 28 in elektrische Energie um, die über den Gleichstrombus 128 dem Stromspeicher 104 zugeführt wird, und insbesondere, falls dieser hinreichend geladen ist, dem ersten Motor/Generator 124 zugeführt wird, der als Motor betreiben wird und den Verbrennungsmotor 36 aktiv antreibt, sodass durch dessen Verdichtungswirkung der Zylinder und Kolben und Reibung eine Motorbremsung erfolgt, um die Rotationsenergie der Häckseltrommel 26 in Wärme umzuwandeln.
(d) Weiterhin kann der zweite Motor/Generator 102 bei geöffneter Kupplung 78 dazu dienen, die Häckseltrommel 26 zum Schleifen mit gegenüber dem Erntebetrieb geänderter Drehzahl und/oder Drehrichtung anzutreiben. Der zweite Motor/Generator 102 wird dann als Motor betrieben und bei stehendem Verbrennungsmotor 36 vom Stromspeicher versorgt oder bei laufendem Verbrennungsmotor 36 vom ersten Motor/Generator 124 mit elektrischer Leistung beaufschlagt. Hierzu sei auf die DE 10 2018 211 863 A1 verwiesen, deren Offenbarung durch Verweis vollumfänglich mit in die vorliegenden Unterlagen aufgenommen wird.
(e) Der Feldhäcksler 10 ist weiterhin mit einem Fremdkörperdetektor 144 ausgestattet, der als Metalldetektor und/oder als Steindetektor zur Erkennung von aufprallenden Steinen ausgeführt und in der vorderen, oberen Vorpresswalze 22 eingebaut sein kann. Wenn der Fremdkörperdetektor 144 anspricht, erhält die damit verbundene Steuereinrichtung 94 ein entsprechendes Signal und veranlasst ein Anhalten des Elektromotors 112. Dieser arbeitet dann generatorisch und die erzeugte Leistung wird über den Gleichstrombus 128 auf den ersten Motor/Generator 124 übertragen, der diese mittels des Verbrennungsmotors 36 in Wärme umwandelt, analog der Betriebsart (c). Auf die beschriebene Weise wird auch der Motor 116 angehalten.
(f) Bisher wurde im Wesentlichen ein so genannter hybrid-elektrischer Betrieb beschrieben, bei dem im Erntebetrieb der Verbrennungsmotor 36 den Motor/Generator 124, 102 antreibt, der seinerseits die Elektromotoren 112 und 116 mit Strom versorgt. Hierbei wird der Stromspeicher 140 grundsätzlich nicht benötigt und könnte auch entfallen. Der Stromspeicher 140 hat demgegenüber jedoch den Vorteil, dass zumindest eine temporäre Vergrößerung der Gesamt-Antriebsleistung des Feldhäckslers 10 möglich ist. Daher ist insbesondere auch ein so genannter Batteriebetrieb des Feldhäckslers 10 vorgesehen.

Für den Batteriebetrieb wird zunächst der hybrid-elektrische Betrieb eingeschaltet. Über eine Eingabe auf der Bedienerschnittstelle 98 hin kann der Stromspeicher 140 hinzugeschaltet werden. Dafür wird der Spannungszustand des Stromspeichers 140 durch die Steuereinrichtung 94 ausgelesen. Dem Wechselrichter 126 des ersten Motor/Generators 124 wird eine Spannung gleich der aktuellen Spannung des Stromspeichers 140 vorgegeben, um zu erreichen, dass im Moment des Zuschaltens des Stromspeichers 140 zum Gleichspannungsbus 128 ein minimaler Strom fließt. Ist dieser Zustand erreicht, wird das mit dem Gleichspannungswandler 146 des Stromspeichers 140 verbundene Relais eingeschaltet. Nun können die Vorpresswalzen 22 und die durch den Elektromotor 116 angetriebenen Elemente des Erntevorsatzes 20 direkt und ausschließlich (oder zumindest zum Teil, je nach dem jeweiligen Leistungsbedarf) aus dem Stromspeicher 140 gespeist werden. Diese vorher vom Verbrennungsmotor 36 aufgebrachte Leistung ist dort nun frei und kann für andere Zwecke eingesetzt werden, nämlich insbesondere für den Antrieb der Häckseltrommel 26.

Im Batteriebetrieb ist der erste Motor/Generator 124 generatorisch aktiv, steuert im Erntebetrieb aber (je nach Durchsatz und Leistungsbedarf) keine Leistung für die Elektromotoren 116, 118 bei. Diese wird dann ausschließlich oder zum Teil aus der Batterie entnommen. Wird vom Feldhäcksler z.B. im Vorgewende oder bei einer Transportfahrt nur eine relativ kleine Leistung benötigt, wird dem ersten Motor/Generator 124 durch die Steuereinrichtung 94 eine höhere Spannung als dem Stromspeicher 140 vorgegeben, sodass ein Strom in den Stromspeicher fließt und dieser nachgeladen werden kann. Grundsätzlich erfolgt Nachladen im Leerlauf, dem Vorgewende und dem Transport.

Zudem kann auch im Erntebetrieb bei kleinen Lasten der erste Motor/Generator 124 durch Anheben von dessen Zielspannung der Stromspeicher 140 geladen werden. Dies kann vor Allem zum Verschieben der Lastpunkte des Verbrennungsmotors 36 zu einer höheren Effizienz im Kraftstoffverbrauchskennlinienfeld verwendet werden. Somit wird die Gesamt-Effizienz des Feldhäckslers 10 angehoben und weniger CO₂ ausgestoßen.

Durch den elektrischen Antrieb des Erntevorsatzes durch den Elektromotor 116 kann dauerhaft die von diesem aufgenommene elektrische Leistung gemessen werden, die ein Maß für den Durchsatz ist. Ist der Bestand in Teilen des Feldes besonders dicht, kann am Erntevorsatz 20 ein erhöhter Leistungsbedarf detektiert werden. Um die Fahrgeschwindigkeit beibehalten zu können, ohne ein Verstopfen des Feldhäckslers 10 zu provozieren, kann dem Wechselrichter 126 des esten Motor/Generators 124 eine Drehzahlvorgabe in dem Sinne geschickt werden, dass der Verbrennungsmotor 36 durch zusätzliches Drehmoment aus dem ersten Motor/Generator 124 mit Energie aus dem Stromspeicher 140 geboostet wird und somit nicht einbricht. Wie bereits oben beschrieben, kann zusätzlich oder alternativ auch der zweite Motor/Generator 102 stromab der Kupplung 78 verwendet werden, um die Drehzahl der Häckseltrommel 26 aufrecht zu erhalten.

Es sei noch angemerkt, dass eine Reihe an Modifikationen der dargestellten Ausführungsformen denkbar ist. So könnten auch die Antriebe der Räder 14, 16 anstelle durch hydrostatische Antriebe durch Elektromotoren erfolgen, die jeweils durch Wechselrichter mit dem Gleichstrombus 128 verbunden und durch die Steuereinrichtung 94 kontrolliert werden. Hierbei kann ein Elektromotor über ein Getriebe beide Räder 14 oder 16 der Vorder- und/oder Hinterachse gemeinsam antreiben oder die Räder werden einzeln angetrieben, insbesondere durch Radnabenmotoren. Analog kann der Antrieb des Lüfters des Hauptkühlpakets elektrifiziert werden. Hierzu sind sowohl ein einziger, zentraler Elektromotor zum Antrieb des Lüfters aller Kühler wie auch ein Lüfter-Array mit mehreren Motoren und Lüftern denkbar, das die einzelnen Kühler anwendungs- und temperaturgesteuert belüftet.

Weiterhin könnte der Antrieb der Körnerprozessorwalzen 38 durch einen oder zwei Elektromotoren erfolgen, die analog zu den Elektromotoren 112, 116 an den Gleichstrombus 128 angeschlossen werden. Hierzu sei auch auf die DE 10 2021 113 626 A1, DE 10 2018 205 221 A1 und DE 10 2013 110 636 A1 verwiesen, deren Offenbarungen vollumfänglich durch Verweis mit in die vorliegenden Unterlagen aufgenommen werden.

Letztlich sei noch angemerkt, dass die Betriebsart (e) nicht davon abhängig sind, dass der zweite Motor/Generator 102 vorhanden ist, sondern sie könnten auch bei einem Feldhäckslers 10 ohne diesen zweiten Motor/Generator 102 Anwendung finden. Das gilt analog für das Anhalten der Vorpresswalzen 22 und der angetriebenen Elemente des Erntevorsatzes 20 bei Ansprechen des Fremdkörperdetektors 144 in der beschriebenen Betriebsart (e). Die bisher diskutierten Details finden sich auch in der DE 10 2023 135 106 A1, deren Offenbarung durch Verweis mit in die vorliegenden Unterlagen aufgenommen wird.

### Kühlung der Elektromotoren und Motoren/Generatoren

In der Figur 3 ist dargestellt, wie die Kühlung der Elektromotoren 112, 116 und der Motoren/Generatoren 102, 124 erfolgt. Aus einem Hydrauliköltank 148 wird mittels einer Pumpe 150, die Bestandteil des Pumpenaggregats 74 sein kann, Hydraulikfluid entnommen und einem Ventilblock 150 zugeführt. Dieser enthält einen direkt mit seinem Einlass 154 verbundenen Ausgang 152, an welchem weitere hydraulisch betriebene Elemente angeschlossen sein können, wie Aktoren zur Verstellung des Auswurfkrümmers 30 oder zum Antrieb eines rotierenden Reinigungssiebs für Kühlluft.

Der Ventilblock 150 umfasst weiterhin eine Anzahl an Drosselventilen 156 bis 170, die eingangsseitig jeweils mit dem Einlass 154 und ausgangsseitig mit einem der Elektromotoren 112, 116 bzw. der Motoren/Generatoren 102, 124 verbunden sind. Demnach erhält jeder der Elektromotoren 112, 116 und Motoren/Generatoren 102, 124 zwei Ströme von Hydraulikfluid durch zugeordnete Leitungen 172 und 174. Jeweils eine dieser Leitungen 172 führt das Hydraulikfluid dem Stator und eine andere der Leitungen 174 dem Rotor des Elektromotors 112, 116 oder Motor/Generators 102, 124 zu.

Die Elektromotoren 112, 116 und Motoren/Generatoren 102, 124 umfassen weiterhin jeweils einen Auslass, der durch jeweils eine Leitung 176 mit einem Rücklauftank 178 verbunden ist. Von dort fließt das Hydraulikfluid vorzugsweise druckfrei in den Hydrauliköltank 148 zurück. Letzterer ist zudem mit einem Ölkühler 180 verbunden, der durch einen Luftstrom gekühlt wird, um die Temperatur des Hydraulikfluids zu vermindern.

### Kühlung des Stromspeichers und Leistungselektronik

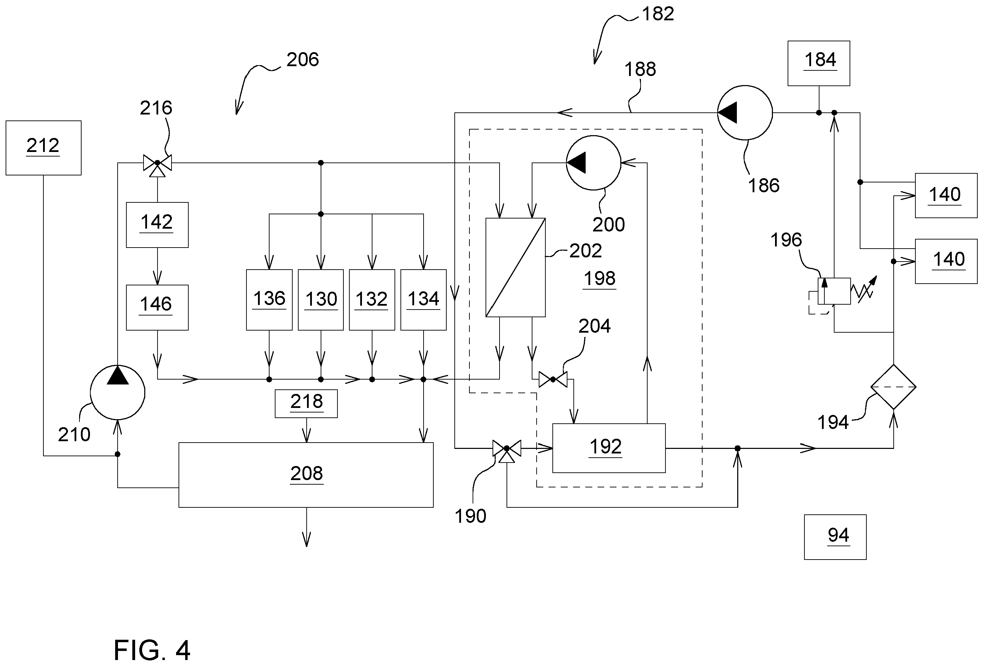

Auch der Stromspeicher 140 ist mit einer Kühlung ausgestattet, die in der Figur 4 schematisch dargestellt wird. Der Stromspeicher 140 kann in zwei oder mehr Einheiten unterteilt sein, was beispielsweise den Vorteil einer modularen Ergänz- und Austauschbarkeit hat, wie in der Figur 4 gezeigt. Aufgrund der hohen Leistung beim Laden und Entladen der einen oder mehreren Stromspeicher 140 entsteht eine gewisse Verlustwärme, die abzuführen ist. Zudem kann bei tiefen Temperaturen auch ein Anwärmen der Stromspeicher 140 sinnvoll sein. Die Stromspeicher 140 werden daher durch eine dielektrische (nichtleitende) Kühlflüssigkeit temperiert, welche die einzelnen Zellen der Stromspeicher 140 umspült, s. WO 2017/067923 A1.

Diese dielektrische Kühlflüssigkeit zirkuliert in einem ersten Kreislauf 182. Ein Expansionstank 184 kann eine gewisse Menge der dielektrischen Kühlflüssigkeit aufnehmen. Eine erste Kühlflüssigkeitspumpe 186 fördert die dielektrische Kühlflüssigkeit durch eine Leitung 188 zu einem verstellbaren Bypass-Ventil 190, von dem aus ein Teil der dielektrischen Kühlflüssigkeit direkt und ein Teil über einen ersten Wärmetauscher 192 zu einem Filter 194 geführt wird. Der Filter 194 ist ausgangsseitig mit einem Einlass der Stromspeicher 140 verbunden, während der Auslass der Stromspeicher wiederum mit dem Expansionstank 184 und dem Einlass der ersten Kühlflüssigkeitspumpe 186 gekoppelt ist. Auf diese Weise bewirkt die erste Kühlflüssigkeitspumpe 186 eine Zirkulation der dielektrischen Kühlflüssigkeit um die Zellen der Stromspeicher 140, wobei der Anteil der dielektrischen Kühlflüssigkeit, der durch den ersten Wärmetauscher 192 geführt wird, durch das verstellbare Bypass-Ventil 190 veränderlich ist.

Die besagte Wärmeabfuhr aus der dielektrischen Kühlflüssigkeit erfolgt durch den ersten Wärmetauscher 192, der durch einen zweiten Kreislauf 198 gekühlt wird. Dieser umfasst neben dem ersten Wärmetauscher 192 einen Kompressor 200 und einen insbesondere als Plattenwärmetauscher ausgeführten, zweiten Wärmetauscher 202 sowie ein Expansionsventil 204. Der zweite Kreislauf 198 arbeitet demnach als Wärmepumpe, indem der Kompressor 200 das im ersten Wärmetauscher 192 aufgeheizte, im zweiten Kreislauf 198 zirkulierende Kältemittel (z.B. ein für Wärmepumpen oder Klimaanlagen übliches Kältemittel) verdichtet und noch mehr aufheizt, sodass im zweiten Wärmetauscher 202 das aufgewärmte Kältemittel seine Wärme an einen dritten Kühlkreislauf 206 abgibt. Der Druck des nun kühleren Kältemittels wird im Expansionsventil 204 wieder reduziert.

Der dritte Kühlkreislauf 206 umfasst eine zweite Kühlflüssigkeitspumpe 210, die einlassseitig mit dem Auslass eines luftdurchströmten Kühlers 208 verbunden ist. Der Luftstrom durch den Kühler 208 wird mittels eines Gebläses 218 erzeugt. Der Einlass der zweiten Kühlflüssigkeitspumpe 210 ist zudem mit einem Expansionstank 212 verbunden. Auslassseitig ist die zweite Kühlflüssigkeitspumpe 210 mit einem Bypass-Ventil 216 verbunden. Dessen erster Auslass ist durch Leitungen mit dem zweiten Wärmetauscher 202 verbunden, sowie mit den Wechselrichtern 126, 130, 132, 134 (bzw. Kanälen an oder in Kühlkörpern der Wechselrichter, um dessen elektronischen Bauteile zu kühlen, vgl. beispielsweise WO 2016/094059 A1). Diese sind auslassseitig durch Leitungen mit dem Einlass des Kühlers 208 verbunden. Der zweite Auslass des Bypass-Ventils 216 ist mit der in der dargestellten Ausführungsform für die Kühlflüssigkeit in Serie geschalteten Ladeeinrichtung 142 und dem Gleichspannungswandler 146 verbunden, dessen Auslass wiederum mit dem Kühler 208 verbunden ist. Der dritte Kühlkreislauf 206 kann als Kühlflüssigkeit beispielsweise mit Frostschutzmittel (z.B. Glykol) versetztes Wasser verwenden.

Diese Kühlflüssigkeit wird von der zweiten Kühlflüssigkeitspumpe 210 über das Bypass-Ventil 216 bei Bedarf der Ladeeinrichtung 142 und dem Gleichspannungswandler 146 zugeführt, sowie den Wechselrichtern 126, 130, 132, 134 und dem Kühler 208.

Die elektronisch verstellbaren Drehzahlen der Kühlflüssigkeitspumpen 186 und 210 sowie des Kompressors 200 können durch die Steuereinrichtung 94 kontrolliert werden, basierend auf Sensoren zur Erfassung der Temperaturen der Kühlflüssigkeiten und Kältemittel in den drei Kühlkreisläufen 182, 198, 206 (bzw. basierend auf den Temperaturen der zu kühlenden Bauteile). Analog können auch die Bypass-Ventile 190 und 216 durch die Steuereinrichtung 94 kontrolliert werden.

## Patentansprüche

1. Antriebssystem für eine selbstfahrende landwirtschaftliche Arbeitsmaschine, umfassend:
einen Stromspeicher (140),
einen Gleichspannungswandler (146), der den Stromspeicher (140) mit einem Gleichspannungsbus (128) verbindet,
einen Elektromotor (112, 116), der über einen Wechselrichter (132, 134) mit dem Gleichstrombus (128) verbunden ist,
einen ersten Kühlkreislauf (182) zur Abführung von Wärme aus dem Stromspeicher (140), durch welchen eine Kühlflüssigkeit umläuft,
einen zweiten Kühlkreislauf (198) zur Abführung von Wärme aus der Kühlflüssigkeit des ersten Kühlkreislaufs (182), durch den ein Kältemittel umläuft, wobei der erste und zweite Kühlkreislauf (182, 198) thermisch durch einen ersten Wärmetauscher (192) verbunden sind und der zweite Kühlkreislauf (198) eine Wärmepumpe enthält und
einen dritten Kühlkreislauf (206) zur Abführung von Wärme aus dem Kältemittel des zweiten Kühlkreislaufs (198) und des Gleichspannungswandlers (146) und des Wechselrichters (132, 134), wobei der zweite und dritte Kühlkreislauf (198, 206) thermisch durch einen zweiten Wärmetauscher (202) verbunden sind und die Kühlflüssigkeit des dritten Kühlkreislaufs (206) dem zweiten Wärmetauscher (202), dem Gleichspannungswandler (146) und dem Wechselrichter (132, 134) zugeführt wird und die Wärme aus dem dritten Kühlkreislauf (206) durch einen Kühler (208) in die Umgebungsluft abgebbar ist.

2. Antriebssystem nach Anspruch 1, mit einem Verbrennungsmotor (36) und einem mit dem Verbrennungsmotor (36) in Antriebsverbindung bringbaren Motor/Generator (102, 124), der mittels eines Gleichspannungswandlers (126, 130) mit dem Gleichspannungsbus (128) verbunden ist, wobei der Gleichspannungswandler (126, 130) des Motor/Generators (102, 124) durch den dritten Kühlmittelkreislauf (206) kühlbar ist.

3. Antriebssystem nach Anspruch 1 oder 2, wobei der Kühler (208) durch ein Gebläse (218) mit einem Luftstrom beaufschlagt wird.

4. Antriebssystem nach einem der Ansprüche 1 bis 3, wobei der zweite Kühlkreislauf (198) einen Kompressor (200) zwischen dem ersten Wärmetauscher (192) und dem zweiten Wärmetauscher (202) und ein Expansionsventil zwischen dem zweiten Wärmetauscher (202) und dem ersten Wärmetauscher (192) umfasst.

5. Antriebssystem nach Ansprüche 2 bis 4, wobei der Elektromotor (112, 116) und der Motor/Generator (102, 124) durch Hydraulikfluid der Arbeitsmaschine gekühlt werden.

6. Arbeitsmaschine, insbesondere Erntemaschine, vorzugsweise Feldhäcksler (10) mit einem Antriebssystem nach einem der Ansprüche 1 bis 5.

## Claims

1. Drive system for a self-propelled agricultural machine, comprising:
a power store (140),
a DC-DC converter (146), which connects the power store (140) to a DC bus (128),
an electric motor (112, 116), which is connected to the DC bus (128) via an inverter (132, 134),
a first cooling circuit (182) for dissipating heat from the power store (140), through which a cooling liquid circulates,
a second cooling circuit (198) for dissipating heat from the cooling liquid of the first cooling circuit (182), through which a refrigerant circulates, wherein the first and the second cooling circuit (182, 198) are thermally connected by a first heat exchanger (192) and the second cooling circuit (198) contains a heat pump, and
a third cooling circuit (206) for dissipating heat from the refrigerant of the second cooling circuit (198) and the DC-DC converter (146) and the inverter (132, 134), wherein the second and the third cooling circuit (198, 206) are thermally connected by a second heat exchanger (202) and the cooling liquid of the third cooling circuit (206) is supplied to the second heat exchanger (202), the DC-DC converter (146) and the inverter (132, 134) and the heat from the third cooling circuit (206) can be discharged into the surrounding air by a cooler (208).

2. Drive system according to Claim 1, having an internal combustion engine (36) and a motor/generator (102, 124) that can be brought into drive connection with the internal combustion engine (36) and which is connected by means of a DC-DC converter (126, 130) to the DC bus (128), wherein the DC-DC converter (126, 130) of the motor/generator (102, 124) can be cooled by the third coolant circuit (206).

3. Drive system according to Claim 1 or 2, wherein the cooler (208) has an air stream applied to it by a blower (218).

4. Drive system according to one of Claims 1 to 3, wherein the second cooling circuit (198) comprises a compressor (200) between the first heat exchanger (192) and the second heat exchanger (202), and an expansion valve between the second heat exchanger (202) and the first heat exchanger (192).

5. Drive system according to Claims 2 to 4, wherein the electric motor (112, 116) and the motor/generator (102, 124) are cooled by hydraulic fluid of the machine.

6. Machine, in particular harvesting machine, preferably forage harvester (10), having a drive system according to one of Claims 1 to 5.

## Revendications

1. Système d'entraînement d'une machine de travail agricole automotrice, comprenant :
un accumulateur d'énergie électrique (140),
un convertisseur de tension continue (146) qui connecte l'accumulateur d'énergie électrique (140) à un bus de tension continue (128),
un moteur électrique (112, 116) qui est connecté au bus de tension continue (128) par l'intermédiaire d'un onduleur (132, 134),
un premier circuit de refroidissement (182) destiné à dissiper la chaleur de l'accumulateur d'énergie électrique (140), dans lequel circule un fluide de refroidissement,
un deuxième circuit de refroidissement (198) destiné à dissiper la chaleur du fluide de refroidissement du premier circuit de refroidissement (182), dans lequel circule un fluide frigorigène, le premier et le deuxième circuit de refroidissement (182, 198) étant reliés thermiquement par un premier échangeur de chaleur (192) et le deuxième circuit de refroidissement (198) contenant une pompe à chaleur et
un troisième circuit de refroidissement (206) destiné à dissiper la chaleur du fluide frigorigène du deuxième circuit de refroidissement (198) et du convertisseur de tension continue (146) et de l'onduleur (132, 134), les deuxième et troisième circuits de refroidissement (198, 206) étant reliés thermiquement par un deuxième échangeur de chaleur (202) et le fluide de refroidissement du troisième circuit de refroidissement (206) étant acheminé au deuxième échangeur de chaleur (202), au convertisseur de tension continue (146) et à l'onduleur (132, 134), et la chaleur provenant du troisième circuit de refroidissement (206) pouvant être évacuée dans l'air ambiant par un refroidisseur (208).

2. Système d'entraînement selon la revendication 1, comprenant un moteur à combustion interne (36) et un moteur/générateur (102, 124) pouvant être amené en liaison motrice avec le moteur à combustion interne (36), ledit moteur/générateur est relié au bus de tension continue (128) par l'intermédiaire d'un convertisseur de tension continue (126, 130), le convertisseur de tension continue (126, 130) du moteur/générateur (102, 124) pouvant être refroidi par le troisième circuit de refroidissement (206).

3. Système d'entraînement selon la revendication 1 ou 2, le refroidisseur (208) étant soumis à un flux d'air par une soufflante (218).

4. Système d'entraînement selon l'une des revendications 1 à 3, le deuxième circuit de refroidissement (198) comprenant un compresseur (200) entre le premier échangeur de chaleur (192) et le deuxième échangeur de chaleur (202) et une soupape de détente entre le deuxième échangeur de chaleur (202) et le premier échangeur de chaleur (192).

5. Système d'entraînement selon les revendications 2 à 4, le moteur électrique (112, 116) et le moteur/générateur (102, 124) étant refroidis par un fluide hydraulique de la machine de travail.

6. Machine de travail, en particulier récolteuse, de préférence ramasseuse-hacheuse (10) comprenant un système d'entraînement selon l'une des revendications 1 à 5.
